# EUROPEAN PATENT SPECIFICATION

(11) **EP 1 590 598 B1**
(45) Date of publication and mention of the grant of the patent: **19.10.2011**
(21) Application number: 04705827.6
(22) Date of filing: 28.01.2004
(51) Int. Cl.: F21V 17/06

(54) **FLIGHT OBSTACLE LIGHT WITH A TUBULAR BODY**
FLUGHINDERNISLEUCHTE MIT EINEM RÖHRENFÖRMIGEN KÖRPER
FEU D'OBSTACLE AERIEN A CORPS TUBULAIRE

(30) Priority: 05.02.2003 FI 20030176
(43) Date of publication of application: 02.11.2005
(73) Proprietor: Obelux Oy, 00380 Helsinki (FI)
(72) Inventor: LAAKSO, Vesa, FIN-01640 Vantaa (FI)
(74) Representative: Järveläinen, Pertti Tauno Juhani
(86) International application number: PCT/FI2004/000039
(87) International publication number: WO 2004/070266

(56) References cited:
- EP-A- 1 334 870
- EP-A- 1 552 983
- EP-A1- 0 449 219
- WO-A-02/066889
- WO-A1-95/23313
- WO-A1-97/44614
- DE-A- 19 922 176
- GB-B- 2 350 176
- JP-A- 04 121 901
- US-A- 5 806 965

## Description

The present invention relates to a horizontally omnidirectional flight obstacle light having a tubular body and, fitted on its outer surface, light emitting semiconductor light sources, such as LEDs (Light Emitting Diodes) or emitters.

WO specification 97/29320 discloses a flight obstacle light operated by a low direct-current voltage, designed to warn aircraft about flight obstacles, such as high-rise buildings, radio towers and chimneys. In this WO specification, the light source consists of LEDs (Light Emitting Diode) mounted e.g. on circuit boards placed one upon the other, on their circular circumference so as to achieve a sufficient luminous intensity, at least 10 cd, as well as a desired illumination pattern, so that the flight obstacle light fitting produces a horizontally omnidirectional light beam emitted at a vertical angle of at least 3°, e.g. 10°.

DE 3806217 discloses an omnidirectional LED light fitting having a cylindrical tubular body and in which the LEDs are arranged in an omnidirectional configuration on the outer surface of the body in three planes at regular distances around the body. The upper end of the body is provided with a solid cover tightly closing the cylinder, and the lower end, which is fixed to a base, is additionally tightened with a solid flange to prevent the entry of splash water into the body. Placed inside the tubular body are a junction box and the control electronics of the light. A problem with the light fitting according to this specification is that the interior part of the body undergoes relatively strong heating because no cooling air can enter into the body, which is why the LEDs and control electronics of the light fitting easily get overheated and the light is relatively easily damaged.

JP 4121901 discloses a flight obstacle light implemented using LEDs and having a closed body provided with relatively small apertures at both the upper and lower ends to improve cooling. In the light fitting according to this JP specification, the internal air flow is not sufficient to produce an adequate cooling effect.

WO 02066889 discloses a beacon lamp which may find use in and around airports, communication towers, etc. The beacon lamp includes a plurality of LEDs as light sources. The plurality of LEDs can be mounted on a LED module which is in turn secured to a base. A transparent outer cover is provided to cover the plurality of LEDs. The LED module can include heat fins to enhance heat sinking properties. The outer cover and base can also include portions to improve free air convection to also improve heat sinking properties.

The object of the present invention is to overcome the drawbacks of prior art and achieve a new type of flight obstacle light in which the light sources and control electronics of the light fitting can be cooled very effectively. The flight obstacle light of the invention has a tubular body which, as stated in claim 1, is completely open at both ends when installed at the place of use to allow more efficient cooling.

In one embodiment of the invention the tubular body allows effective circulation of cooling air inside the body and permitting the light fitting to be cooled by free circulation of air to achieve an optimal control of heat. In addition, the control and connection unit of the flight obstacle light is placed outside the body to allow circulation of cooling air inside the body. According to the invention, the light can be provided with a transparent protective hood fitted around the body, and in addition it can be provided with a cylindrical protective mask having perforations in the area of the light sources and placed between the protective hood and the body to protect the control electronics from UV radiation.

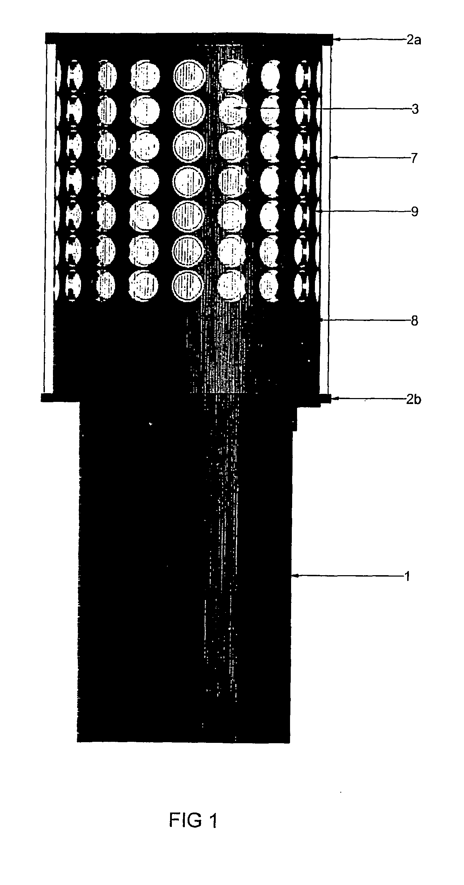

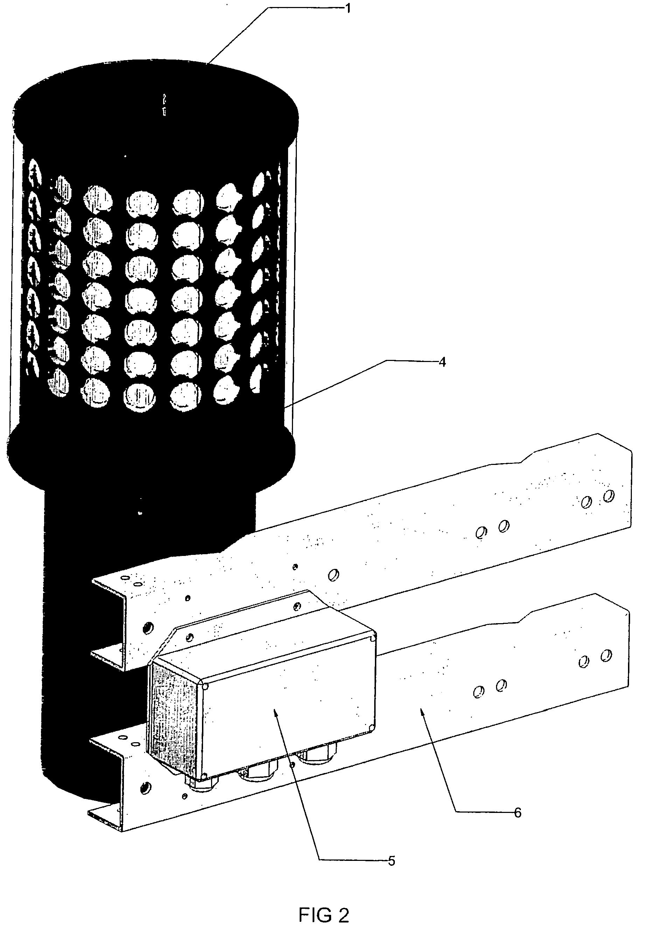

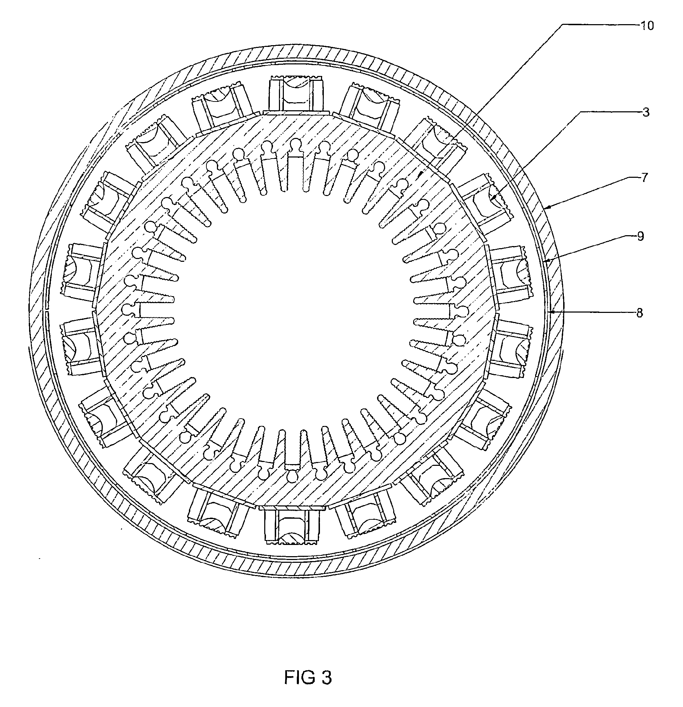

In the following, the invention will be described in detail with reference to an example and the attached drawing, wherein Fig. 1 presents a perspective view of the flight obstacle light of the invention, Fig. 2 presents the flight obstacle light of the invention and its connection box, and Fig. 3 presents the flight obstacle light of Fig. 1 and 2 in vertical section.

The flight obstacle light presented in Fig. 1 and 2 has a metallic tubular body 1, which has flange parts 2a and 2b and which, when installed at the place of use, is completely open at both ends, in other words, an opening of a size corresponding to the diameter of the tube is provided at both the upper and lower ends of the tube. Between the flange parts 2a and 2b there are light emitting red emitters 3 provided with a directional lens for outward radiation and fastened to the outer surface of the tube e.g. by means of screws, arranged horizontally at regular distances between them and vertically at six levels so that a sufficient luminous power, at least 10 cd, as well as a desired illumination pattern are achieved, the flight obstacle light thus producing a horizontally omnidirectional light beam emitted at a vertical angle of at least 3°, e.g. 10°.

The control electronics unit 4 and the connection box 5, which is provided with overvoltage protection, are placed outside the body, the control electronics being mounted on the lower flange 2b and the connection box on a separate frame structure 6. Fitted around the body 1 is a cylindrical transparent protective hood 7, and in addition the light fitting may have a non-transparent, cylindrical protective mask 8 placed between the protective hood 7 and the body 1 to protect the control electronics inside it from UV radiation, said protective mask 8 being provided with perforations (holes 9) aligned with the light sources 3. The control electronics unit 4 and the connection box 5 connecting the electricity supply to the light are connected to each other by a cable.

The body 1 may be provided with internal cooling ribs 10 (Fig. 3) for more efficient cooling.

The light fitting of the invention can be mounted in a vertical orientation, so that an optimal air flow occurs as the light fitting is warmed up.

The outer surface of the body is polygonal, providing an even mounting surface for the light sources, which means that the heat is effectively transferred to the body.

It is obvious to the person skilled in the art that different embodiments of the invention are not restricted to the example described above, but that they may be varied within the scope of the claims presented below.

## Claims

1. A flight obstacle light fitting having a tubular body (1) provided with light emitting semiconductor light sources (3), such as LEDs or emitters, fitted around it on its outer circumference at at least one level and provided with directional lenses, oriented horizontally outwards,
**characterized in that**
the tubular body (1) is when installed at the place of use completely open at both ends to allow more efficient cooling.

2. A light fitting according to claim 1, **characterized in that** the body (1) is provided with a cylindrical transparent protective part (7) fitted around it.

3. A light fitting according to claim 1, **characterized in that** it is provided with a cylindrical protective mask (8) having perforations aligned with the light sources (3) and fitted between the protective hood (7) and the body (1) especially to provide UV protection, and that a control unit (4) is placed between the mask (8) and the body (1).

4. A light fitting according to claim 1, **characterized in that** the body (1) allows efficient cooling of the light fitting by free air circulation to achieve an optimal heat control, and it can be mounted in a vertical orientation, so that an optimal air flow occurs as the light fitting is warmed up.

5. A light fitting according to claim 1, **characterized in that** the body (1) is provided with interior cooling ribs (10) or equivalent to achieve more efficient cooling.

6. A light fitting according to claim 1, **characterized in that** the control electronics (4) and electricity supply unit (5) of the light fitting are separate units and the connection unit (5) is disposed outside the body.

## Patentansprüche

1. Flughindernisleuchtenaufbau mit einem röhrenförmigen Körper (1), welcher mit Licht emittierenden Halbleiterlichtquellen (3), wie beispielsweise LEDs oder Emittern, versehen ist, die rundum auf seinem äußeren Umfang in zumindest einer Ebene montiert und mit gerichteten Linsen versehen sind, die horizontal nach außen orientiert sind,
**dadurch gekennzeichnet,**
**dass** der röhrenförmige Körper (1) dann, wenn er an dem Ort der Verwendung installiert ist, an beiden Enden vollständig offen ist, um eine effizientere Kühlung zu ermöglichen.

2. Leuchtenaufbau nach Anspruch 1,
**dadurch gekennzeichnet,**
**dass** der Körper (1) mit einem zylindrischen transparenten um den Körper herum angepassten Schutzteil (7) versehen ist.

3. Leuchtenaufbau nach Anspruch 1,
**dadurch gekennzeichnet,**
**dass** er mit einer zylindrischen Schutzmaske (8) mit auf die Lichtquellen (3) ausgerichteten Perforationen versehen und zwischen die Schutzhülle (7) und den Körper (1) eingepasst ist, insbesondere um einen UV-Schutz zu schaffen, und
**dass** eine Regeleinheit (4) zwischen der Maske (8) und dem Körper (1) platziert ist.

4. Leuchtenaufbau nach Anspruch 1,
**dadurch gekennzeichnet,**
**dass** der Körper (1) eine effiziente Kühlung des Leuchtenaufbaus mittels freier Luftzirkulation ermöglicht, um eine optimale Wärmesteuerung zu erhalten, und er in einer vertikalen Orientierung befestigt werden kann, sodass eine optimale Luftströmung auftritt, wenn der Leuchtenaufbau aufgewärmt ist.

5. Leuchtenaufbau nach Anspruch 1,
**dadurch gekennzeichnet,**
**dass** der Körper (1) mit inneren Kühlungsrippen (10) oder einem Äquivalent dazu versehen ist, um eine effizientere Kühlung zu erhalten.

6. Leuchtenaufbau nach Anspruch 1,
**dadurch gekennzeichnet,**
**dass** die Regelungselektronik und die Elektrizitätsversorgungseinheit (5) des Leuchtenaufbaus getrennte Einheiten sind und ihre Verbindungseinheit (5) außerhalb des Körpers angeordnet ist.

## Revendications

1. Appareil d'éclairage d'obstacle aérien comprenant un corps tubulaire (1) pourvu de sources de lumière (3) semi-conductrices électroluminescentes, telles que des LED ou des émetteurs, montées autour de celui-ci sur sa périphérie extérieure à au moins un niveau et dotées de lentilles directionnelles, orientées horizontalement vers l'extérieur,
**caractérisé en ce que**
le corps tubulaire (1) lorsqu'il est installé sur le lieu d'utilisation est totalement ouvert aux deux extrémités afin de permettre un refroidissement plus efficace.

2. Appareil d'éclairage selon la revendication 1, **caractérisé en ce que** le corps (1) est doté d'une partie (7) de protection cylindrique transparente montée autour de celui-ci.

3. Appareil d'éclairage selon la revendication 1, **caractérisé en ce qu'**il est doté d'un masque (8) de protection cylindrique présentant des perforations alignées avec les sources de lumière (3) et fixé entre le capot de protection (7) et le corps (1) pour fournir en particulier une protection contre les UV, et **en ce qu'**une unité de commande (4) est placée entre le masque (8) et le corps (1).

4. Appareil d'éclairage selon la revendication 1, **caractérisé en ce que** le corps (1) permet un refroidissement efficace de l'appareil d'éclairage par circulation libre de l'air pour arriver à régulation optimale de la chaleur, et il peut être fixé dans une orientation verticale, de sorte qu'un flux d'air optimal se produit lorsque l'appareil d'éclairage monte en température.

5. Appareil d'éclairage selon la revendication 1, **caractérisé en ce que** le corps (1) est doté des nervures de refroidissement (10) intérieures ou d'un équivalent à celles-ci pour abouti à un refroidissement plus efficace.

6. Appareil d'éclairage selon la revendication 1, **caractérisé en ce que** l'unité électronique de commande (4) et l'unité d'alimentation électrique (5) de l'appareil d'éclairage sont des unités séparées et l'unité de raccordement (5) est disposée à l'extérieur du corps.
